# EUROPEAN PATENT SPECIFICATION

(11) **EP 2 438 420 B1**
(45) Date of publication and mention of the grant of the patent: **01.05.2013**
(21) Application number: 10726934.2
(22) Date of filing: 04.06.2010
(51) Int. Cl.: G01M 3/32

(54) **HEAT EXCHANGER INTEGRITY TESTING**
WÄRMETAUSCHER-INTEGRITÄTSPRÜFUNG
TEST D'INTEGRITE D'ECHANGEUR DE CHALEUR

(30) Priority: 05.06.2009 IE 20090444
(43) Date of publication of application: 11.04.2012
(73) Proprietor: Unison Engineering Services Limited, Limerick (IE)
(72) Inventor: SHEEHAN, Paul Michael, Limerick (IE)
(74) Representative: Litton, Rory Francis
(86) International application number: PCT/EP2010/057862
(87) International publication number: WO 2010/139801

(56) References cited:
- WO-A1-2006/007656
- WO-A1-2007/064285
- DE-A1-102006 016 559
- DE-A1-102007 041 766
- GB-A- 2 411 480
- US-A- 4 492 113
- US-A- 6 035 700
- US-A1- 2003 034 146
- US-A1- 2004 129 061

## Description

### Introduction

The present invention relates to a method of heat exchanger integrity testing and specifically to one having at least one low-pressure section and at least one high-pressure section when incorporated into a larger plant system.

The terms "integrity" or "integrity testing" are used in this specification to refer to the identification of leaks between a high-pressure section and a low-pressure section of the heat exchanger. Strictly speaking the term covers other leaks, but as explained below these are not as important as the leaks which occur between a high-pressure section and a low-pressure section.

The purpose of the testing is to ensure that there are no leaks between the high-pressure sections and the low-pressure sections of a heat exchanger. While it goes without saying that there should be no leaks generally from either of the sections into the atmosphere and surrounding area, these are not nearly as important as cross- contamination of product when there is contamination of product in the low-pressure section by the introduction of liquid from the high-pressure section. This is a particular problem in the food industry where it can lead to product recall and general disturbance of the manufacturing process.

Plate heat exchangers are used extensively in industry and particularly in the food industry, for example, in pasteurising plants. A typical construction of such a plate heat exchanger comprises a plurality of gasketed stainless steel plates compressed into a frame. It is not uncommon to have of the order of between 10 and 600 plates in six separate sections. Accordingly, there are a large number of parts, pipe connections, valves and the like equipment in such heat exchangers. All of these are subject to deterioration and leakage.

The major problem with these plate heat exchangers, is that in use, over a period of time, cracks form in some of the plates leading to the transfer of fluid from one section of the heat exchanger to another section. A further serious problem is that there may be a cracked plate with a small pinhole in it, which is the normal plate fault and that pinhole may be blocked by the liquid been treated such as milk, orange juice or indeed any liquid with suspended particles. That pinhole may not be cleared of the blockage during conventional testing procedures only to be cleared by the operation of the plate heat exchanger very shortly after recommissioning.

In most cases the procedure adopted is to effectively totally isolate the plate heat exchanger by removing all the connecting piping. The section to be tested it is usually purged and drained and then testing apparatus is connected to it. With this type of test the system liquid which is drained from the heat exchanger is usually lost and this can be expensive for example when the liquid is alcohol, glycol and other such liquids

Various test methods have been put forward to address this problem which have not heretofore been that successful. For example, US Patent Specification No. 6,035,700 describes a method of testing a plate heat exchanger, using a separate gas, which is a very elaborate and time-consuming operation requiring the shutting down of the plate heat exchanger. The problem of using a gas as a test medium is that all of the liquid previously contained in that section of the plate heat exchanger has to be removed and this can be relatively difficult to achieve. Accordingly, due to liquid been retained in the plate heat exchanger the test is often not comprehensive One of the prior art methods discussed in this patent specification includes pressurising one side of the heat exchanger surface. This states that, for example, monitoring the pressure with no external leakage will indicate a cross - leakage to the heat transfer surface by way of a pressure change. The general principle has always been well-known however, what has not been appreciated is how to do it in an efficient manner. Heretofore, it has required the use of outside contractors and considerable downtime.

Because the testing is relatively time-consuming and expensive it is often only carried out three or four times a year with the consequent problems that may arise due to a leakage causing product contamination. There are certain additional problems that arise when a contractor is operating on the plant in the sense that often outside contaminants are introduced during the testing, whether simply from the manner in which the maintenance carried out or simply from the use of testing fluids. A further problem , as referred to already, is that very often the testing requires considerable disassembly of the plant and this together with the reassembly operation, in turn, often causes failure to occur some short time after the plant has been recommissioned.

A further problem with the use of contractors is that to a certain extent there is a conflict of interests. If the contractor identifies leaks then the contractor is commissioned to repair the plate heat exchanger. Presuming that the contractor does not find a leak and then a leak occurs relatively shortly thereafter this can cause considerable problems regarding the liability or otherwise of the contractor together with the problems of more machine downtime. In any case unfortunately, many of the staff of such contractors are relatively inexperienced and indeed badly trained.

An example of a prior art method of detecting a leak in a plate heat exchanger may be seen in U.K. Patent Publication Number GB 2411480 (THORNHILL SERVICE (UK) LIMITED) which discloses a method of testing for a leak by isolating a low-pressure section of a plate heat exchanger from the overall system and charging the low-pressure section with water until the water has reached a preset level in a sight glass located at the output of the low-pressure section. An associated high-pressure section is then pressurised and the low-pressure section is monitored to ascertain whether there is a leak between the high-pressure section and the low-pressure section.

US4,492,113 (WEATHERHOLT) discloses a heat exchanger cleaning method and apparatus. The heat exchanger cleaning apparatus is preferably used on a conventional combustion engine to clean scale from a section within a heat exchanger. The heat exchanger cleaning apparatus intersperses pressurised water with pressurised air pockets which flow through a section of the heat exchanger creating a shock wave effect to remove scale and accumulated dirt from the path of the section of heat exchanger. After cleaning, the heat exchanger cleaning apparatus can be used to pressurise the section of heat exchanger and monitor the pressure level for a potential leak.

U.S. Patent Publication Number US2004/129061 (RABELLE), PCT Patent Publication Number WO2007/064285 (TETRA LAVAL HOLDINGS & FINANCE), U.S. Patent Publication Number US2003/034146 (KAUFMAN), and, German Patent Publication Number 10 2006 016559 (AIR LIQUIDE DEUTSCHLAND GMBH) all disclose feature of the present invention without offering relatively simple test procedure or method which can be carried out by the plant operator at regular intervals with minimal disturbance of production.

What is required is a relatively simple test procedure or method which can be carried out by the plant operator at regular intervals with minimal disturbance of production.

### Statements of the Invention

According to the invention there is provided a method of testing the integrity of a heat exchanger having at least one low-pressure section and at least one the high-pressure section when incorporated into a larger plant, comprising the steps, prior to operating the heat exchanger, of:
isolating each section from the system;
pressurising the high-pressure section to a pressure not less than the working pressure;
measuring the pressure in the high-pressure section after a preset time interval to determine whether there has been a drop in pressure and thus a leak between the high-pressure system section and the low-pressure system section.

By isolating the high-pressure system section and the low-pressure system section there is no dismantling of any of the heat exchanger connections and accordingly there will not be any air pockets in any of the high-pressure or low-pressure sections as the heat exchanger remains fully charged with liquid which ensures that all of the heat exchanger will be tested.

Essentially when the test is started, after automatically operating a series of valves and a pump or pumps to make sure both sides of the plates in each of the high-pressure section and the low-pressure section of, for example, a plate heat exchanger are fully charged with the liquid medium, the low pressure section is then pressurised, normally by water and not by a gas in contraflow to it is normal flow direction to a pressure of between 2 and 10 bar for a preset length of time, with no pressure exerted on the high-pressure section during this period. The high-pressure section may be pressurised but generally would be at atmospheric pressure and must be at least 2 bar below the pressure of the low-pressure section. The purpose of this is to clear any blockages there may be on the opposite side of the plates due to normal build-up of product residue after continuous use of such a plate heat exchanger during product processing. Then both sides of the high-pressure section and the low-pressure section are set to atmospheric pressure. Then the high-pressure section is pressurised to a test pressure usually of the order of between 2 and 10 bar, concentrating only on the pressure on the surface of the plates in this section and not on leaking gaskets, at atmospheric pressure in the low pressure section such that, the valves at the inlet and outlet of this section are closed isolating this low-pressure section from any increase in pressure except from a leaking plate. Therefore if there is a cracked or damaged plate arise in pressure in the low-pressure section will be detected.

This invention will be controlled by suitable control means such as a computer which will operate the tests either at each start up of the heat exchanger or other regular predetermined intervals of time.

### Detailed Description of the Invention

The invention will be more clearly understood from the following description of some embodiments thereof, given by way of example only, with reference to the accompanying drawings in which:
Figure 1 is a diagrammatic view of a plate heat exchanger illustrating the method of the present invention, and
Figure 2 is a view similar to Figure 1 illustrating an alternative method of carrying out the present invention.

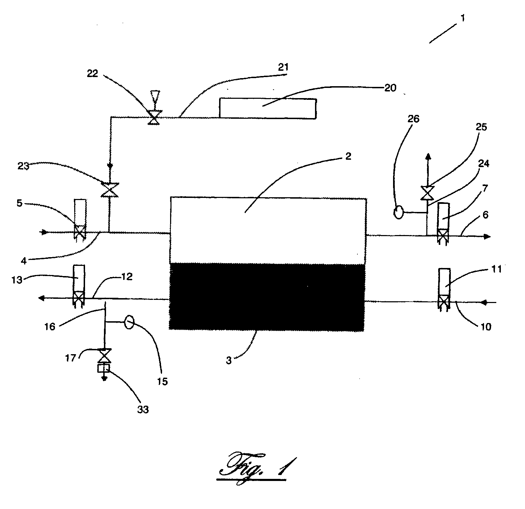

Referring to the drawings and initially to Figure 1 thereof, there is illustrated in outline a plate heat exchanger, identified generally by the reference numeral 1, comprising a high pressure section 2 and a low-pressure section 3. The high pressure section 2 is connected to a product inlet pipe 4 having a shut-off valve 5 and feeds a product outlet pipe 6 having a shut-off valve 7. The low-pressure section 3 is fed by a water inlet pipe 10 having a shut-off valve 11 and in turn feeds a water outlet pipe 12 and shut-off valve 13. A pressure transmitter 15 is connected by a pipe 16 having a bleed-off valve 17 to the water outlet pipe 12. In the embodiment shown in Fig. 1, a flow meter 33 is connected to the bleed-off valve 17, although, it will be appreciated that the use of a flow meter is entirely optional.

An auxiliary pump 20 is connected by a pipe 21 through a pressure relief valve 22 and a further shut-off valve 23 to the product inlet pipe 4. The product outlet pipe 6 has a vent pipe 24 feeding a pressure relief valve 25. The vent pipe 24 also incorporates a pressure transmitter 26.

Various temperature and pressure sensing instruments are provided but are not illustrated for clarity.

In operation, the four valves 5, 7, 11 and 13 are closed. Accordingly, the plate heat exchanger is effectively isolated from the system. The low-pressure chamber or section 3 is pressurised with water to a pressure between 0 and 1 bar. Care is taken to ensure that the low-pressure section 3 is totally flooded and charged. The other chamber, namely, the high pressure section 2 is then pressurised to between 3 and 20 bar depending on the pressure decided to be used. This can generally be either the normal working pressure or some pressure in excess of that, such as its maximum operating pressure.

The high pressure section 2 and the low-pressure section 3 are monitored with both pressure and temperature being monitored to ensure that they are constant for a successful test. Presuming that there has been no increase or a change in temperature in the sections 2 and 3 and there is a pressure drop in the high pressure section 2 and a corresponding pressure rise in the low-pressure section 3 indicates that there has been a leak between the high pressure section 2 and the low-pressure section 3. Various other calculations may be made depending on what measurements had been carried out. For example, by knowing the volume of each chamber and the pressure drop, it is possible to estimate the size of the leak.

It is also envisaged, for example, that another method to enable the size of the leak to be estimated would be to establish the actual amount of liquid delivered out of the high pressure section into the low-pressure section by using the flow meter 33.

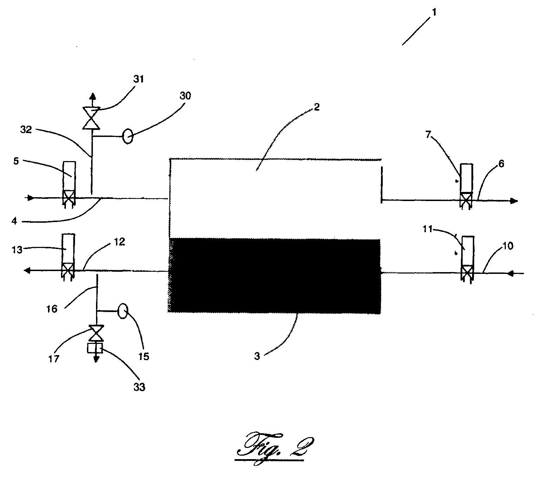

Referring now to Figure 2, parts similar to those described with reference to Figure 1 are identified by the same reference numerals. In the method illustrated by this drawing, an ancillary pump is not used as the product system pump is used instead, which pump is not illustrated. A pressure transmitter 30 and bleed-off valve 31 feed the product inlet pipe 4 via a pipe 32.

In operation, the valves 11 and 13 are closed and the valves 5 and 7 are opened. The bleed-off valve 17 is also opened. The product system pump is started which creates an unbalanced pressure between the two sections of the heat exchanger as the low-pressure system pump is not operated. The bleed-off valve 17 is kept open until the low-pressure section 3 is fully charged and it is then closed. As the high-pressure section or system pump is operated for the test time, usually about 30 minutes, there is constant pressure in the high pressure section 2. Again any leak will be easily identified.

It will be appreciated that the test systems described above, and any other variations thereof which are envisaged and deemed appropriate, may be carried out automatically at preset time intervals by the use of a suitable computer and relevant software. It is also envisaged that an appropriate time for carrying out such a test would be prior to re-starting the plant after a lay-off period.

To summarise the operation of the invention, when the test is started by use of a suitable computer controlled operations a series of valves and a pump or pumps are operated to ensure that both the high-pressure section and the low pressure section is fully charged by introducing water into both sections. Introducing water into the high-pressure section will marginally dilute the system liquid such as alcohol or glycol as they are simply refrigerant liquids it will have relatively little effect. Similar considerations apply to heating or pasteurising liquids. These sections are both at approximately atmospheric pressure when the low-pressure section is charged with water at a pressure of between 2 and 10 bar and in contraflow to the normal direction of flow of the liquid been treated. This will clear, hopefully, any blockage that there may be on the opposite side of the plates due to normal buildup of product residue after continuous use in production. Then both sections are set to atmospheric pressure and the high-pressure section is pressurised to a set pressure usually, between 2 and 10 bar concentrating only on the pressure on the surface of the plates and not on leaking gaskets. This is achieved as at atmospheric pressure in the low-pressure section the valves at inlet and outlet of this low-pressure section have isolated this low-pressure section from any increase in pressure except from a cracked plate. Accordingly, any rise in pressure in the low-pressure section indicates a leak.

It will be appreciated that one of the major advantages of the present invention is that the test can be carried out over relatively short intervals of time without the need to dismantle or in any way interfere with the smooth operation of the plate heat exchanger. Indeed, integrity testing may be carried out every day even more than once a day

Ideally, the plant is restarted at intervals which are determined by the risks and costs associated with failure. Generally, for example, in a food factory restarting once every day or every shift should be enough. For example, if on starting a shift a leak is detected it is usually a relatively simple task to identify when a product was made in the previous shift. Then by a process of elimination and testing batches at defined production time intervals contaminated product can easily be identified and either destroyed, or be processed again.

There are some considerable advantages of the present invention which will be apparent from the description above. Firstly, the plate heat exchanger is not taken out of production or isolated during the test. Secondly, none of the system liquids are lost but are used as part of the test protecting its integrity. Thirdly, there is no question of a conflict-of-interest in that the customer is doing their own test and it is only when a leak is determined that a contractor is employed. Fourthly, since none of the connections are being dismantled there is no question of introducing contaminants or indeed air which could cause air pockets and cause difficulties in the testing. The fact that generally water is introduced into the low-pressure section which is the section that contains the product to be treated does not it will be appreciated cause any difficulties.

While the present invention has been described with reference to plate heat exchangers as these are the most commonly used type of heat exchanger in many industries, it will be appreciated that the invention can be equally applied to any other construction of heat exchanger such as a shell or tube heat exchanger.

It will be appreciated that one of the major advantages of the present invention is that the operator of the plant has total control over integrity testing and accordingly control over maintenance planning. Indeed, in many instances as long as there is no leakage between the high-pressure section and the low-pressure section a considerable amount of leakage can be tolerated.

In this specification the terms "comprise" and "include" and any variations thereof for grammatical reasons are used interchangeably and are to be accorded the widest possible interpretation.

The invention is not limited to the embodiments and examples of the working of the invention hereinbefore described but may be varied in both construction and detail within the scope of the claims.

## Claims

1. A method of testing the integrity of a heat exchanger (1) having at least one low-pressure section (3) and at least one high-pressure section (2) when incorporated into a larger plant system, comprising the steps, prior to operating the heat exchanger (1), of:
isolating each section (2, 3) from the system;
on isolating each section (2, 3) from the system, the low-pressure section (3) is first pressurised to a pressure of the order of 2 to 10 bar above that of the high-pressure section (2) which is maintained at substantially atmospheric pressure;
pressurising the high pressure section (2) to a pressure not less than the working pressure;
allowing the low-pressure section (3) to be at atmospheric pressure;
and
measuring the pressure in the high pressure section (2) after a preset time interval to determine whether there has been a drop in pressure and thus a leak between the high-pressure system section (2) and the low-pressure section (3).

2. A method as claimed in claim 1 in which pressurised fluid to elevate the pressure in the low-pressure section (3) is introduced in contraflow to the normal flow of liquid through the low-pressure section (3).

3. A method as claimed in claim 2 in which the fluid is a liquid.

4. A method as claimed in claim 3 in which the liquid is water.

5. A method as claimed in any preceding claim in which the temperature is monitored during the test to ensure that there is no variation in temperature, likely to cause an inaccurate measurement.

6. A method as claimed in any preceding claim in which the high-pressure section (2) is pressurised to a pressure in excess of the working pressure.

7. A method as claimed in any preceding claim in which the pressure in the low-pressure section (3) is measured and an increase in the pressure in the low-pressure section (3) is used as an indicator of the likely size of the leak.

8. A method as claimed in any preceding claim in which a flushing liquid such as water is used to carry out the test and a separate pump (20) is provided connected to the heat exchanger (1).

9. A method as claimed in any of claims 1 to 7, inclusive, in which system fluid and system pumps are used to carry out the test.

10. A method as claimed in any preceding claim in which the testing is carried out at preset time intervals to ensure that when a leak occurs not too much product is affected.

11. A method as claimed in any preceding claim in which computerised control means are provided to operate suitably positioned valves (5, 7, 11, 13) to isolate the low-pressure section (3) and the high-pressure section (2) and pumps as required to pressurise the high-pressure section (2), on start-up, to provide the necessary method.

12. A method as claimed in any preceding claim in which the following steps are carried out:
valves (5, 7, 11, 13) are operated to isolate the heat exchanger (1) in the plant;
a pump (20) is operated to ensure that both sections (2, 3) being tested are fully charged with liquid;
the low-pressure section (3) is then pressurised by water in contraflow to its normal flow direction for a preset length of time while in maintaining the high pressure section (2) at atmospheric pressure;
setting both the high-pressure section (2) and the low pressure section (3) to atmospheric pressure; and
pressurising the high-pressure section (2) to carry out the necessary test.

## Patentansprüche

1. Verfahren zur Prüfung der Integrität eines Wärmetauschers (1), der zumindest einen Niederdruckteil (3) und zumindest einen Hochdruckteil (2) bei Einbau in ein größeres Anlagensystem aufweist und das, vor Betreiben des Wärmetauschers (1), folgende Schritte umfasst:
Isolieren jedes Teils (2, 3) vom System;
nach Isolieren jedes Teils (2, 3) vom System, wird der Niederdruckteil (3) zunächst auf einen Druck der Größenordnung von 2 bis 10 bar über dem des Hochdruckteils (2), der im Wesentlichen auf atmosphärischen Druck beibehalten wird, beaufschlagt;
Beaufschlagen des Hochdruckteils (2) auf einen Druck von nicht weniger als den Arbeitsdruck;
zulassen, dass der Niederdruckteil (3) auf atmosphärischen Druck ist;
und
Messen des Drucks im Hochdruckteil (2) nach einem voreingestellten Zeitintervall, um zu ermitteln ob ein Druckabfall und folglich ein Leck zwischen dem Hochdruckteil (2) und den Niederdruckteil (3) aufgetreten ist.

2. Verfahren wie in Anspruch 1 beansprucht, bei dem unter Druck stehendes Fluid zum Erhöhen des Drucks im Niederdruckteil (3), in Gegenströmung zur normalen Strömung der Flüssigkeit durch den Niederdruckteil (3), eingeführt wird.

3. Verfahren wie in Anspruch 2 beansprucht, bei dem das Fluid eine Flüssigkeit ist.

4. Verfahren wie in Anspruch 3 beansprucht, bei dem die Flüssigkeit Wasser ist.

5. Verfahren wie in einem beliebigen vorangehenden Anspruch beansprucht, bei dem die Temperatur während der Prüfung überwacht wird, um sicherzustellen, dass keine Temperaturschwankung vorliegt, die eine ungenaue Messung verursachen könnte.

6. Verfahren wie in einem beliebigen vorangehenden Anspruch beansprucht, bei dem der Hochdruckteil (2) auf einen Druck beaufschlagt ist, der den Arbeitsdruck überschreitet.

7. Verfahren wie in einem beliebigen vorangehenden Anspruch beansprucht, bei dem der Druck im Niederdruckteil (3) gemessen wird und eine Zunahme an Druck im Niederdruckteil (3) als eine Anzeige der wahrscheinlichen Größe des Lecks verwendet wird.

8. Verfahren nach einem beliebigen vorangehenden Anspruch, bei dem eine Spülflüssigkeit wie beispielsweise Wasser zum Ausführen der Prüfung verwendet und eine an den Wärmetauscher (1) angeschlossene separate Pumpe (20) bereitgestellt wird.

9. Verfahren wie in einem beliebigen der Ansprüche 1 bis einschließlich 7 beansprucht, bei dem Systemfluid und Systempumpen zur Ausführung der Prüfung verwendet werden.

10. Verfahren wie in einem beliebigen vorangehenden Anspruch beansprucht, bei dem das Prüfen in voreingestellten Zeitintervallen ausgeführt wird, um sicherzustellen, dass bei Auftreten eines Lecks nicht zu viel Produkt betroffen ist.

11. Verfahren wie in einem beliebigen vorangehenden Anspruch beansprucht, bei dem computerisierte Steuermittel bereitgestellt sind, um geeignet positionierte Ventile (5, 7, 11, 13) zu betätigen, um den Niederdruckteil (3) und den Hochdruckteil (2) und Pumpen wie erforderlich zu isolieren, um den Hochdruckteil (2), bei Anlauf, mit Druck zu beaufschlagen, um das erforderliche Verfahren bereitzustellen.

12. Verfahren wie in einem beliebigen vorangehenden Anspruch beansprucht, bei dem die folgenden Schritte ausgeführt werden:
Ventile (5, 7, 11, 13) werden betätigt, um den Wärmetauscher (1) in der Anlage zu isolieren;
eine Pumpe (20) wird betätigt, um sicherzustellen, dass beide zu prüfenden Teile (2, 3) voll mit Flüssigkeit geladen sind;
der Niederdruckteil (3) dann mit Wasser im Gegenstrom zur normalen Strömungsrichtung für eine voreingestellte Zeitdauer druckbeaufschlagt wird, während der Hochdruckteil (2) zu atmosphärischen Druck beibehalten wird;
Einstellen sowohl des Hochdruckteils (2) als auch des Niederdruckteils (3) auf atmosphärischen Druck; und
Druckbeaufschlagung des Hochdruckteils (2) zum Ausführen der erforderlichen Prüfung.

## Revendications

1. Procédé pour tester l'intégrité d'un échangeur de chaleur (1) ayant au moins une section basse pression (3) et au moins une section haute pression (2) lorsqu'il est incorporé dans le circuit d'une installation plus grande, comprenant les étapes, effectuées avant l'utilisation de l'échangeur de chaleur (1), consistant à :
isoler chaque section (2, 3) du circuit ;
lors de l'isolation de chaque section (2, 3) du circuit, la section basse pression (3) est tout d'abord pressurisée à une pression de l'ordre de 2 à 10 bars au-dessus de celle de la section haute pression (2) qui est maintenue essentiellement à la pression atmosphérique ;
pressuriser la section haute pression (2) à une pression pas inférieure à la pression de service ;
permettre à la section basse pression (3) d'être à la pression atmosphérique ;
et à
mesurer la pression dans la section haute pression (2) après un intervalle de temps pré-réglé pour déterminer si il y a eu une chute de pression et donc une fuite entre la section du circuit haute pression (2) et la section basse pression (3).

2. Procédé selon la revendication 1, dans lequel du fluide sous pression pour élever la pression dans la section basse pression (3) est introduit à contre-courant par rapport à l'écoulement normal de liquide à travers la section basse pression (3).

3. Procédé selon la revendication 2, dans lequel le fluide est un liquide.

4. Procédé selon la revendication 3, dans lequel le liquide est de l'eau.

5. Procédé selon l'une quelconque des revendications précédentes, dans lequel la température est surveillée pendant le test pour garantir qu'il n'y ait pas de variation de température, susceptible de causer une mesure inexacte.

6. Procédé selon l'une quelconque des revendications précédentes, dans lequel la section haute pression (2) est pressurisée à une pression dépassant la pression de service.

7. Procédé selon l'une quelconque des revendications précédentes, dans lequel la section basse pression (3) est mesurée et une augmentation dans la pression de la section basse pression (3) est utilisée comme un indicateur de la taille probable de la fuite.

8. Procédé selon l'une quelconque des revendications précédentes, dans lequel on utilise un liquide de rinçage tel que de l'eau pour effectuer le test et une pompe séparée (20) est prévue et raccordée à l'échangeur de chaleur (1).

9. Procédé selon l'une quelconque des revendications 1 à 7, dans lequel on utilise le fluide du circuit et les pompes du circuit pour effectuer le test.

10. Procédé selon l'une quelconque des revendications précédentes, dans lequel le test est effectué à des intervalles de temps pré-réglés pour garantir que, lorsqu'une fuite se produit, pas trop de produit est affecté.

11. Procédé selon l'une quelconque des revendications précédentes, dans lequel des moyens de commande informatisés sont prévus pour actionner des vannes positionnées de manière appropriée (5, 7, 11, 13) pour isoler la section basse pression (3) et la section haute pression (2) et des pompes, selon les besoins, pour pressuriser la section haute pression (2), lors du démarrage, pour fournir le procédé nécessaire.

12. Procédé selon l'une quelconque des revendications précédentes, dans lequel les étapes suivantes sont exécutées :
des vannes (5, 7, 11, 13) sont actionnées pour isoler l'échangeur de chaleur (1) dans l'installation ;
une pompe (20) est actionnée pour garantir que les deux sections (2, 3) testées sont complètement chargées de fluide ;
la section basse pression (3) est alors pressurisée par de l'eau en contre-courant à son sens normal d'écoulement pendant une longueur de temps préréglée tout en maintenant la section haute pression (2) à la pression atmosphérique ;
la section haute pression (2) et la section basse pression (3) sont toutes deux mises à la pression atmosphérique ; et
la section haute pression (2) est pressurisée pour effectuer le test nécessaire.
